# EUROPÄISCHE PATENTSCHRIFT

(11) **EP 1 765 641 B1**
(45) Veröffentlichungstag und Bekanntmachung des Hinweises auf die Patenterteilung: **18.02.2009**
(21) Anmeldenummer: 05742950.8
(22) Anmeldetag: 21.05.2005
(51) Int. Cl.: B60R 15/00

(54) **MOBILE SANITÄRANLAGE ZUR ORTSUNABHÄNGIGEN SANITÄREN VERSORGUNG EINER VIELZAHL VON PERSONEN**
MOBILE SANITARY SYSTEM FOR LOCATION-INDEPENDENT SANITARY CARE OF A PLURALITY OF PEOPLE
INSTALLATION SANITAIRE MOBILE POUR POURVOIR AUX BESOINS D'UNE MULTITUDE DE PERSONNES INDEPENDAMMENT DU LIEU

(30) Priorität: 09.06.2004 DE 102004029033
(43) Veröffentlichungstag der Anmeldung: 28.03.2007
(73) Patentinhaber: Kärcher Futuretech GmbH, 71364 Winnenden (DE)
(72) Erfinder: MERZ, Erwin, 71334 Waiblingen (DE); MOSER, Michael, 74420 Oberrot-Hausen (DE); SIEGLE, Gunter, 73630 Remshalden-Geradstetten (DE); TATAR, Johann, 71686 Remseck/ Neckarrems (DE)
(74) Vertreter: Duhme, Torsten
(86) Internationale Anmeldenummer: PCT/EP2005/005539
(87) Internationale Veröffentlichungsnummer: WO 2005/120901

(56) Entgegenhaltungen:
- WO-A-87/07665
- US-A- 2 817 091
- US-A- 4 107 795
- PATENT ABSTRACTS OF JAPAN Bd. 1998, Nr. 08, 30. Juni 1998 (1998-06-30) & JP 10 071900 A (TOTO LTD; HAABEST:KK; PRESS KOGYO KK), 17. März 1998 (1998-03-17)
- PATENT ABSTRACTS OF JAPAN Bd. 2002, Nr. 10, 10. Oktober 2002 (2002-10-10) & JP 2002 178843 A (NAGAWA:KK), 26. Juni 2002 (2002-06-26)

## Beschreibung

Die vorliegende Erfindung betrifft eine mobile Sanitäranlage zur ortsunabhängigen sanitären Versorgung einer Vielzahl von Personen, mit einer transportablen Plattform, insbesondere einem Fahrgestell, auf der eine Vielzahl von Sanitärelementen und eine Anzahl von technischen Versorgungseinrichtungen für die Sanitärelemente angeordnet sind.

Eine solche Sanitäranlage ist beispielsweise aus US 5,548,856 bekannt.

Mobile Sanitäranlagen werden vor allem dann benötigt, wenn eine große Anzahl von Personen über einen längeren Zeitraum hinweg abseits der Zivilisation leben müssen. Typische Anwendungsfälle sind militärische Übungen oder Einsätze von größeren Truppenverbänden, aber auch humanitäre Anwendungen, beispielsweise im Rahmen einer Katastrophenhilfe in einem Erdbebengebiet. Darüber hinaus werden mobile Sanitäranlagen häufig auch bei Volksfesten und anderen Großveranstaltungen eingesetzt, wenn die dort vorhandenen Kapazitäten an stationären Sanitäranlagen nicht ausreichend sind. Die vorliegende Erfindung bezieht sich in ihrer bevorzugten Ausführungsform zwar vorrangig auf die erstgenannten Anwendungsfälle, sie ist jedoch darauf nicht beschränkt.

Eine mobile Sanitäranlage besitzt eine Vielzahl von Sanitärelementen, die den Benutzern für die Körperpflege und/oder zur Verrichtung ihrer Notdurft zur Verfügung stehen. Insbesondere handelt es sich hierbei um Duschen, Waschbecken, Toiletten, Urinale und anderes. Darüber hinaus benötigt eine mobile Sanitäranlage technische Versorgungseinrichtungen für die Sanitär elemente, wie etwa Frischwasser- und/oder Fäkalientanks, eine Heizung zur Warmwasseraufbereitung, Pumpen und anderes mehr. Diese technischen Versorgungseinrichtungen müssen dem Benutzer der mobilen Sanitäranlage in aller Regel nicht zugänglich sein.

Aus der eingangs genannten US 5,548,856 ist eine mobile Sanitäranlage mit insgesamt vier Chemietoiletten und zwei Handwaschbecken bekannt. Die genannten Sanitärelemente und die zugehörige Versorgungstechnik, wie insbesondere Fäkalientanks, sind auf einem zweiachsigen Anhänger, das heißt auf einer fahrbaren Plattform angeordnet. Jeweils zwei Chemietoiletten befinden sich nebeneinander am vorderen und am hinteren Ende des Anhängers. Zwischen den vier Chemietoiletten sind zwei Fäkalientanks und weitere Versorgungseinrichtungen angeordnet, die jeweils von den Längsseiten des Anhängers her frei zugänglich sind. Die bekannte Sanitäranlage bietet mit diesem Aufbau einen eng beschränkten Anwendungsbereich, nämlich als mobile Toilettenstation. Eine sanitäre Vollversorgung für eine Vielzahl von Personen ist nicht möglich:

Eine weitere mobile Sanitäranlage ist aus US 2,817,091 bekannt. Diese Sanitäranlage ist ebenfalls auf einem Anhänger als transportabler Plattform installiert, und sie bietet einer Vielzahl von Personen verschiedene sanitäre Versorgungsmöglichkeiten, jedoch keine Duschen. Die bekannte Sanitäranlage ist vom Konzept her eher als öffentliche Toilettenanlage für Großveranstaltungen etc. angelegt. Sie ist recht großbauend, was ihren Transport in schwierigem Gelände erschwert und eine Verlegung per Luftfracht unter Umständen unmöglich macht.

Vergleichbare mobile Toilettenanlagen sind aus DE 27 17 705 A1 und WO 87/07665 bekannt. Auch diese Anlagen sind konzeptionell eher für Großveranstaltungen ausgelegt und für militärische Einsätze oder bei einer Katastrophenhilfe in unzugänglichem Gelände wenig geeignet.

Eine weitere mobile Sanitäranlage ist aus DE 93 07 507 U1 bekannt, wobei es sich hier um ein mobiles Toilettenfahrzeug handelt, das insbesondere für Körperbehinderte vorgesehen ist. Eine sanitäre Vollversorgung für eine Vielzahl von Personen ist damit nicht möglich.

Für militärische Anwendungen gibt es eine Reihe von Anbietern von mobilen Sanitäranlagen. Eine Anlage, die in einem Lkw- und luftverlastbaren Standardcontainer untergebracht ist, wird beispielsweise von der italienischen Firma elettromeccanica Cara S.r.l. angeboten. Weitere gattungsgemäße Sanitäranlagen bietet die französische Firma SERT unter der Bezeichnung RD 3000, RD 2400 oder RS 2400 an. Die vorliegende Anmelderin bietet unter der Bezeichnung SC 30 ebenfalls eine mobile Sanitäranlage für derartige Anwendungen an.

Bei allen mobilen Sanitäranlagen stehen sich gegensätzliche Anforderungen gegenüber, nämlich einerseits der Wunsch nach möglichst einfacher Transportierbarkeit und damit verbundenen Randbedingungen in Bezug auf Außenmaße und Gewicht und andererseits ein möglichst großer Nutzungskomfort und Anwendungsbereich für die Benutzer. Keine der bislang bekannten Sanitäranlagen hat diese gegensätzlichen Anforderungen in optimaler Weise erfüllt. Es besteht daher Verbesserungsbedarf.

Vor diesem Hintergrund ist es eine Aufgabe der vorliegenden Erfindung, eine mobile Sanitäranlage der eingangs genannten Art anzugeben, die eine vielfältige sanitäre Versorgung einer größeren Anzahl von Personen ermöglicht und dabei einfach transportierbar ist.

Diese Aufgabe wird gemäß einem Aspekt der vorliegenden Erfindung mit einer Sanitäranlage der eingangs genannten Art gelöst, bei der die technischen Versorgungseinrichtungen in einem zentralen Bereich der Plattform angeordnet sind, der von der Vielzahl der Sanitärelemente ringsum umgeben ist.

Im Gegensatz dazu sind die technischen Versorgungseinrichtungen bei allen bislang bekannten mobilen Sanitäranlagen von einem Randbereich her zugänglich. Anders ausgedrückt ist bei keiner bisher bekannten mobilen Sanitäranlage das Konzept verwirklicht, die technischen Versorgungseinrichtungen ringsum mit Sanitärelementen für die Benutzer zu umgeben. Ringsum bedeutet dabei in diesem Zusammenhang, dass die Sanitärelemente sämtliche Außenseiten der mobilen Sanitäranlage einnehmen, die prinzipiell einen Zugang für Benutzer der Sanitärelemente ermöglichen. Wenn die Sanitäranlage beispielsweise auf einem Anhänger oder einer räderlosen, jedoch autarken Plattform, wie etwa einem Container, untergebracht ist, sind die Sanitärelemente also an den vier Außenseiten des Anhängers oder Containers angeordnet. Besitzt die Sanitäranlage hingegen als Plattform das Gestell eines Lkws mit Führerhaus, wäre das Konzept der vorliegenden Erfindung auch schon realisiert, wenn die Sanitärelemente zusammen mit dem Führerhaus (an einer Seite) die technischen Versorgungseinrichtungen umgeben. Aus Kostengründen ist es jedoch in aller Regel bevorzugt, die mobile Sanitäranlage nicht mit einer eigenen Transportmöglichkeit auszurüsten, also nicht auf einem Lkw fest anzuordnen. Insofern ist es bevorzugt, dass die Vielzahl der Sanitärelemente die technischen Versorgungseinrichtungen von vier Seiten her umgeben.

Das neue Konzept besitzt eine Reihe von Vorteilen. Zum einen sind die technischen Versorgungseinrichtungen in der Regel relativ schwere Komponenten im Vergleich zu den Sanitärelementen. Durch die neue Anordnung wird das Hauptgewicht der gesamten Sanitäranlage im zentralen Bereich der Plattform konzentriert. Handelt es sich bei der Plattform beispielsweise um einen mittelachsigen Anhänger, wird der Masseschwerpunkt der gesamten Anlage optimal über der Achse positioniert. Die Sanitäranlage ist daher beim Transport gut zu manövrieren und auch im Betriebszustand von sich aus stabil gelagert. Darüber hinaus bietet das neue Konzept eine maximale Zugänglichkeit zu den Sanitärelementen, was die gleichzeitige Versorgung einer Vielzahl von Personen begünstigt. Andererseits lässt sich eine geringe Bauhöhe realisieren, so dass die Benutzer der Sanitäranlage ggf. nur wenige Treppenstufen hochsteigen müssen. Eine geringe Bauhöhe verbessert darüber hinaus die Transportfähigkeit und sie ermöglicht es, ggf. auf Geländer oder ähnliche Sicherungsmaßnahmen gegen Absturz zu verzichten, was Gewicht einspart.

Ein weiterer großer Vorteil des neuen Konzepts besteht darin, dass die Wasservorräte der Sanitäranlage sehr effizient beheizt werden können, da sie sich als Teil der technischen Versorgungseinrichtungen in dem zentralen und ringsum von Sanitärelementen umgebenen Bereich befinden. Der aufzuheizende Raumbereich ist hierdurch minimiert und darüber hinaus leichter thermisch zu isolieren. Auch die Versorgungsleitungen zwischen Frischwassertanks und/oder Fäkalientanks und den Sanitärelementen sind minimal. Die einfache und effiziente Beheizung ermöglicht es ferner, Brennstofftanks kleiner und leichter zu gestalten, ohne die normale Betriebsdauer der Sanitäranlage zu reduzieren, was ebenfalls die Transportfähigkeit begünstigt.

Insgesamt besitzt das neue Konzept somit eine Reihe von Vorteilen, die sowohl eine flexible und vielseitige sanitäre Versorgung einer Vielzahl von Personen als auch die Mobilität der Anlage begünstigen. Die genannte Aufgabe ist daher vollständig gelöst.

In einer bevorzugten Ausgestaltung weist jedes Sanitärelement eine Rückwand auf, wobei die Vielzahl der Rückwände die technischen Versorgungseinrichtungen umlaufend umschließen.

Diese Ausgestaltung besitzt den Vorteil, dass die technischen Versorgungseinrichtungen sehr einfach und blickdicht dem Zugriff der Benutzer der Sanitäranlage entzogen sind. Hierdurch wird ein wirksamer Schutz gegenüber gewollten oder ungewollten Beschädigungen erreicht. Darüber hinaus wird das ggf. aufzuheizende Raumvolumen begrenzt, was die bereits zuvor erwähnten Vorteile noch stärker hervortreten lässt.

In einer weiteren Ausgestaltung beinhalten die technischen Versorgungseinrichtungen einen Schaltschrank mit einem Bedienpult, das über die Rückwand nach oben hinausragt.

Diese Maßnahme ermöglicht unter Beibehaltung der zuvor genannten Vorteile eine einfache und komfortable Steuerung der neuen Sanitäranlage. Zum Schutz vor Manipulationen und/oder Beschädigungen kann das Bedienpult durch eine verschließbare Klappe oder dergleichen abgedeckt sein. Die Maßnahme ist darüber hinaus besonders vorteilhaft in Kombination mit einer weiter unten erwähnten Ausgestaltung, nämlich einem in der Höhe verstellbaren Dach. Ein feststehendes Bedienpult, das gerade eben über die Höhe der Rückwände hinausragt, ist einfach zu installieren und ermöglicht ggf. auch die Bedienung des höhenverstellbaren Daches.

In einer weiteren Ausgestaltung ist zumindest eines der Sanitärelemente derart beweglich angeordnet, dass es in einer ersten Position an den zentralen Bereich angrenzt und in einer zweiten Position vom zentralen Bereich entfernt ist, um einen Zugang zum zentralen Bereich freizugeben.

Hierbei handelt es sich um eine besonders bevorzugte Ausgestaltung, da die Wartung und ggf. Reparatur der neuen Sanitäranlage wesentlich vereinfacht wird. Darüber hinaus kann durch diese Ausgestaltung der zur Verfügung stehende Bauraum optimal ausgenutzt werden, so dass die neue Sanitäranlage sehr kompakt realisiert werden kann. Grundsätzlich wäre jedoch auch eine Wartung der technischen Versorgungseinrichtungen von oben oder unten möglich.

In einer sehr einfachen Realisierung der zuvor genannten Ausgestaltung kann das zumindest eine Sanitärelement eine vorbereitete Demontagemöglichkeit besitzen, so dass es einfach zu demontieren ist. Das Sanitärelement kann dann von der Sanitäranlage abgenommen werden, um den Zugang zu den technischen Versorgungseinrichtungen freizugeben.

In einer bevorzugten Ausgestaltung ist das zumindest eine Sanitärelement an einem Gestell befestigt, das eine Verschiebebewegung des zumindest einen Sanitärelements ermöglicht, und zwar vorzugsweise in zumindest einer horizontalen Achsrichtung.

Diese Ausgestaltung ermöglicht einen sehr einfachen und komfortablen Zugang zu den technischen versorgungseinrichtungen. Der Zugang ist sehr schnell möglich und darüber hinaus ist die Wiederherstellung des normalen Betriebszustandes durch Zurückschieben des zumindest einen Sanitärelements zuverlässig gewährleistet. Die Verschiebung des Sanitärelements in einer horizontalen Achsrichtung ist zudem bevorzugt, weil sie vom Kraftaufwand her einfach durchzuführen ist und darüber hinaus eine geringe Bauhöhe der gesamten Sanitäranlage ermöglicht.

In einer weiteren bevorzugten Ausgestaltung ist das Verschiebegestell so ausgebildet, dass es eine Verschiebebewegung in zumindest zwei zueinander orthogonalen und vorzugsweise horizontalen Achsrichtungen ermöglicht.

Eine solche zweidimensionale Verschiebemechanik besitzt eine Reihe von Vorteilen. Zum einen ermöglicht sie es, das zumindest eine Sanitärelement ausschließlich in der Horizontalen, jedoch mit einem großen Verstellweg zu verschieben. Hierdurch wird einerseits ein sehr komfortabler Zugang zu den technischen Versorgungseinrichtungen ermöglicht und andererseits eine geringe Bauhöhe und eine Verstellbewegung mit geringem Kraftaufwand erreicht. Darüber hinaus kann die zweidimensionale Verschiebemechanik, wie nachfolgend anhand eines besonders bevorzugten Ausführungsbeispiels dargelegt ist, auch dazu verwendet werden, die Bedienbarkeit der Sanitärelemente für den Benutzer zu verbessern, insbesondere wenn das betroffene Sanitärelement im Bereich der Radkästen eines Anhängers oder im Bereich sonstiger Engstellen montiert ist. Außerdem ermöglicht eine zweidimensionale Verschiebemechanik, das betroffene Sanitärelement gewissermaßen aus der Reihe der Sanitärelemente "herauszuziehen", was im Transportzustand eine sehr kompakte Bauform erlaubt.

In einer weiteren Ausgestaltung sind die Sanitärelemente zu einer Vielzahl von Sanitärmodulen verbunden, wobei jeweils ein Sanitärmodul an einer Seite des zentralen Bereichs angeordnet ist. Vorzugsweise ist jedes Sanitärmodul einstückig ausgebildet, wobei es eine Reihe von Sanitärelementen aufweist.

Diese Ausgestaltung ist besonders vorteilhaft in Kombination mit einem Verschiebegestell, da durch Verschieben eines Sanitärmoduls ein besonders großer Zugang zu den zentralen Versorgungseinrichtungen ermöglicht wird. Darüber hinaus ermöglicht die Verwendung von Sanitärmodulen einen kostengünstigen und variablen Aufbau der neuen Sanitäranlage.

In einer weiteren Ausgestaltung besitzt die neue Sanitäranlage ein in der Höhe verstellbares Dach, wobei ein Verstellantrieb für das Dach vorzugsweise am Dach selbst angeordnet ist.

Durch diese Ausgestaltung lässt sich die Bauhöhe der neuen Sanitäranlage beim Transport weiter reduzieren. Der Transport wird weiter vereinfacht. Andererseits müssen die Benutzer der neuen Sanitäranlage keine Einschränkungen in Bezug auf den Nutzungskomfort hinnehmen. Die Anordnung des Verstellantriebs am Dach besitzt den Vorteil, dass Antriebswellen, Schneckengetriebe, Seilzugmechaniken und dergleichen dorthin verlagert sind, wo keine Sanitärelemente benötigt werden. Daher lässt sich in dieser Ausgestaltung der Hygienebereich für den Nutzer optimal ausnutzen.

In einer weiteren Ausgestaltung weist das Dach an seiner Oberseite eine zentrale Vertiefung auf, deren Grundfläche unterhalb eines oberen Dachniveaus liegt, wobei vorzugsweise zumindest ein mit den technischen Versorgungseinrichtungen verbundener Kamin unterhalb des oberen Dachniveaus in der Vertiefung endet.

Die genannte Vertiefung besitzt bereits für sich genommen den Vorteil, dass das Dach in einer Leichtbaukonstruktion stabil realisiert werden kann. Die Vertiefung führt nämlich durch die Profilierung zu einer erhöhten Stabilität. Die bevorzugt in der Vertiefung angeordnete Mündung eines Kamins besitzt darüber hinaus den Vorteil, dass der Kamin beim Transport vor Beschädigungen geschützt ist. Infolge dessen ist die neue Sanitäranlage noch einfacher zu transportieren.

In einer weiteren Ausgestaltung läuft die Vertiefung in zumindest einen seitlich zum Dachrand abzweigenden Kanal aus.

Diese Ausgestaltung ist eine sehr einfache und effiziente Maßnahme zur Entwässerung der zentralen Vertiefung. An Stelle des genannten Kanals wäre beispielsweise auch ein zentraler Wasserablauf möglich. Die bevorzugte Ausgestaltung ist jedoch kostengünstiger zu realisieren und besitzt darüber hinaus den Vorteil, dass der abzweigende Kanal eine weitere Profilierung des Daches zur Folge hat, die die Stabilität erhöht.

In einer weiteren Ausgestaltung besitzt die neue Sanitäranlage eine Vielzahl von ersten schwenkbaren Seitenklappen, die die Sanitärelemente in einer ersten Schwenkposition zumindest teilweise wandartig von außen bedecken und die in einer zweiten Schwenkposition einen umlaufenden Trittbereich um die Sanitärelemente bilden.

Die Verwendung von schwenkbaren Seitenklappen mag für sich genommen von anderen vergleichbaren Sanitäranlagen bekannt sein. Im Zusammenhang mit der vorliegenden Erfindung ermöglicht diese Ausgestaltung jedoch einen einfachen Zugang zu sämtlichen Sanitärelementen. Darüber hinaus schützen die Seitenklappen die Sanitärelemente beim Transport sehr gut gegen Beschädigungen, ohne dass hierzu ein besonderer Aufwand erforderlich ist.

In einer weiteren Ausgestaltung besitzt die neue Sanitäranlage eine Vielzahl von zweiten schwenkbaren Seitenklappen, die die Sanitärelemente in einer ersten Schwenkposition zumindest teilweise wandartig von außen bedecken und die in einer zweiten Schwenkposition einen umlaufenden Dachbereich über den Sanitärelementen bilden.

Auch die zweiten Seitenklappen erhöhen den Nutzungskomfort, indem sie den Dachbereich der Sanitäranlage im Betriebszustand vergrößern. Andererseits wird hierdurch ein noch besserer Schutz der Sanitärelemente vor Transportbeschädigungen erreicht.

In einer weiteren Ausgestaltung der zuvor genannten Maßnahme übergreifen die zweiten schwenkbaren Seitenklappen die ersten schwenkbaren Seitenklappen von oben, wenn sich die ersten und zweiten Seitenklappen jeweils in ihrer ersten Schwenkposition befinden.

Durch diese Maßnahme wird eine sehr einfache und effiziente Transportsicherung der ersten schwenkbaren Seitenklappen erreicht.

In einer weiteren Ausgestaltung sind die zweiten Seitenklappen jeweils mit zumindest einem Federelement verbunden, welches die zweiten Seitenklappen aufgrund seiner Geometrie sowohl in ihrer ersten als auch in ihrer zweiten Schwenkposition fixiert.

Diese Ausgestaltung ermöglicht eine besonders einfache und zuverlässige Transportsicherung der zweiten Seitenklappen. Dadurch, dass das genannte Federelement in beiden Schwenkpositionen eine Haltefunktion übernimmt, lässt sich der mechanische Aufbau der neuen Sanitäranlage vereinfachen und deren Gewicht reduzieren.

In einer weiteren Ausgestaltung beinhalten die Sanitärelemente zumindest eine Dusche, zumindest eine Toilette und/oder zumindest ein Waschbecken. Bevorzugt sind jeweils eine Vielzahl der genannten Sanitärelemente in der neuen Sanitäranlage enthalten.

Dies führt zu einem breiten Anwendungsbereich und damit zu einer vielseitigen Nutzung, was im Hinblick auf die hohe Transportfähigkeit und flexible Nutzung aufgrund des neuen Konzepts von großem Vorteil ist.

In einer weiteren Ausgestaltung ist im Bereich des Waschbeckens ein verschwenkbarer Spiegel, insbesondere ein handelsüblicher Lkw-Seitenspiegel angeordnet.

Die Verwendung von Spiegeln im Bereich von Waschbecken ist bei Sanitäranlagen für sich genommen natürlich nichts Neues. Sehr vorteilhaft ist jedoch die Verwendung eines verschwenkbaren Spiegels, da dies eine Montage des Spiegels im Hinblick auf optimale Raumausnutzung und minimale Transportabmessungen ermöglicht. Bevorzugt ist es insbesondere, den Spiegel niedriger als in der üblichen Nutzerhöhe anzuordnen, da sich hierdurch die maximale Bauhöhe der Sanitäranlage zugunsten der Transportfähigkeit reduzieren lässt. Die Verwendung eines handelsüblichen Lkw-Seitenspiegels (Außenspiegels) ist besonders bevorzugt, weil diese Spiegel ausgesprochen robust und zudem sehr kostengünstig sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine teilweise aufgeschnittene, isometrische Ansicht eines bevorzugten Ausführungsbeispiels der neuen Sanitäranlage,
- Figur 2: die Sanitäranlage aus Figur 1, wobei aus Gründen der Übersichtlichkeit die Dachkonstruktion nicht dargestellt ist und wobei ein Sanitärmodul verschoben ist, um einen Zugang zu den technischen Versorgungseinrichtungen freizugeben,
- Figur 3: die Sanitäranlage aus Figur 2 in einer Draufsicht von oben, wobei sich sämtliche Sanitärmodule in ihrer Transportposition befinden,
- Figur 4: den zentralen Bereich der Sanitäranlage aus Figur 1 mit technischen Versorgungseinrichtungen sowie einem Verschiebegestell, an dem zwei Sanitärmodule verschieblich angeordnet sind,
- Figur 5: eine isometrische Darstellung einer bevorzugten Dachkonstruktion für die Sanitäranlage aus Figur 1, und
- Figur 6: das Grundgerüst der Dachkonstruktion aus Figur 5 mit weiteren Details.

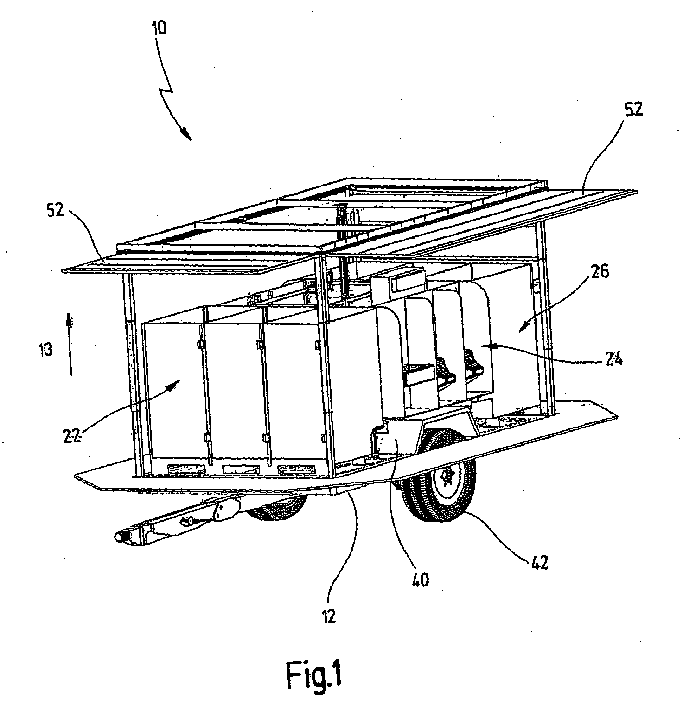

In Figur 1 ist ein Ausführungsbeispiel der neuen Sanitäranlage in seiner Gesamtheit mit der Bezugsziffer 10 bezeichnet.

Die Sanitäranlage 10 ist hier auf einem einachsigen Kfz-Anhänger 12 aufgebaut, der eine transportable Plattform bildet. Der Anhänger 12 besitzt in diesem Ausführungsbeispiel ein zulässiges Gesamtgewicht von 3,5 Tonnen. Die Transportabmessungen der Sanitäranlage 10 betragen in diesem Ausführungsbeispiel in etwa 6 m x 2, 3 m in Länge und Breite sowie etwa 2,5 m in der Höhe.

Die Sanitäranlage 10 ist in Figur 1 allerdings nicht in ihrem Transportzustand dargestellt, sondern in ihrem Betriebszustand, in dem die Abmessungen etwa 6,6 m x 3,6 m in Länge und Breite und etwa 3,2 m in der Höhe betragen. Die vergrößerten Abmessungen ergeben sich durch das Ausschwenken der nachfolgend noch beschriebenen Seitenklappen sowie durch Anheben der Dachkonstruktion in Richtung des Pfeils 13.

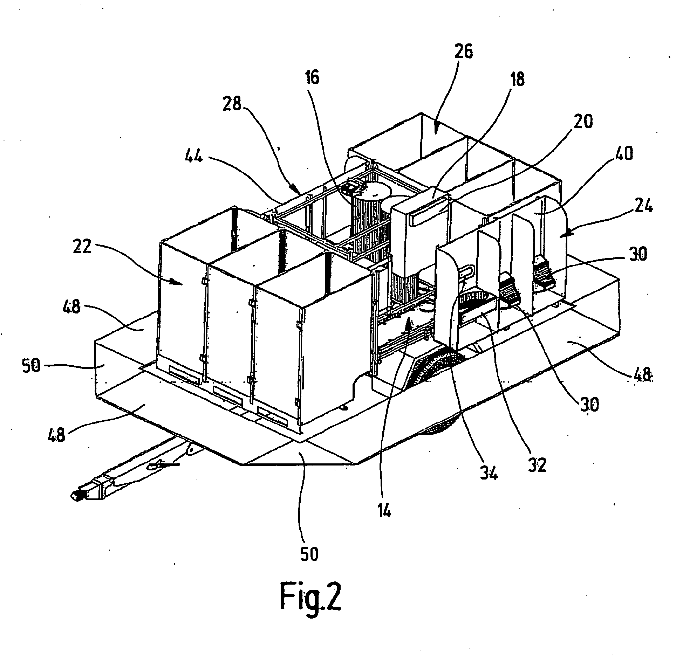

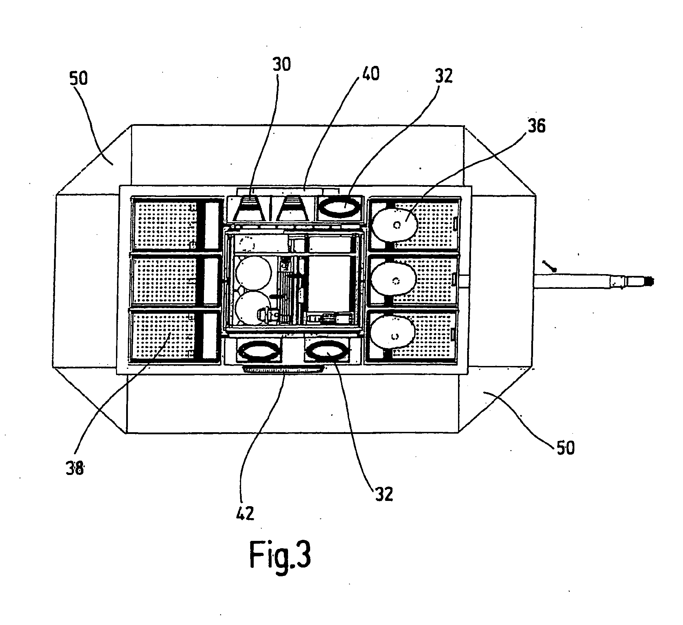

Für die nachfolgende Beschreibung der Sanitäranlage 10 wird ergänzend auf die Figuren 2 und 3 Bezug genommen, in denen gleiche Bezugszeichen dieselben Elemente bezeichnen wie in Figur 1.

Die Sanitäranlage 10 besitzt auf dem Anhänger 12 einen zentralen Bereich 14, in dem praktisch alle technischen Versorgungseinrichtungen für die Sanitäranlage 10 untergebracht sind. Beispielhaft sind hier ein Tank 16 sowie ein Schaltschrank 18 mit einem Bedienpult 20 bezeichnet. Darüber hinaus beinhalten die technischen Versorgungseinrichtungen beispielsweise eine Warmwasseraufbereitung, eine oder mehrere Pumpen, eine elektrische Versorgung, einen Kraftstofftank für die Heizanlage und anderes (hier nicht im Einzelnen dargestellt).

Es versteht sich, dass Kleinteile, wie beispielsweise eine 12- oder 24-Volt Batterie oder ein Anschluss für eine externe Stromversorgung je nach Bedarf auch außerhalb des zentralen Bereichs 14 angeordnet sein können, ohne das Grundkonzept, wonach die wesentlichen technischen Versorgungseinrichtungen im zentralen Bereich 14 zusammengefasst und von Sanitärelementen umgeben sind, zu verlassen.

Mit den Bezugsziffern 22, 24, 26 und 28 sind vier Sanitärmodule bezeichnet, die den zentralen Technikbereich 14 von vier Seiten umgeben. In dem gezeigten, bevorzugten Ausführungsbeispiel beinhaltet das Sanitärmodul 24 zwei nebeneinander angeordnete Urinale 30 sowie ein Waschbecken 32. Oberhalb des Waschbeckens 32 ist ein verschwenkbarer Spiegel 34 angeordnet. In dem bevorzugten Ausführungsbeispiel ist der verschwenkbare Spiegel 34 ein handelsüblicher Lkw-Seitenspiegel, der waagerecht oberhalb des Waschbeckens 32 montiert ist. Zwischen den beiden Urinalen 30 und dem Waschbecken 32 ist jeweils eine vertikale Zwischenwand angeordnet, so dass die Sanitärelemente 30, 32 optisch gegeneinander abgeschirmt sind.

Das Sanitärmodul 22 beinhaltet hier drei durch Zwischenwände voneinander abgetrennte und nach vorne hin durch Türen verschlossene Toilettenkabinen mit jeweils einer Toilette 36 (Figur 3). Das Sanitärmodul 26 beinhaltet drei Duschkabinen mit jeweils einer Dusche 38. Das vierte Sanitärmodul 28 beinhaltet zwei nebeneinander angeordnete Waschbecken 32 (Figur 3).

In dem bevorzugten Ausführungsbeispiel sind die räumlichen Außenabmessungen der Sanitärmodule 22 und 26 gleich groß. Gleiches gilt für die Sanitärmodule 24 und 28, die sich jedoch in ihren Außenabmessungen von dem Sanitärmodulen 22, 26 unterscheiden. Die Sanitärmodule 22, 26 sind in ihren Außenabmessungen größer. Sie sind am vorderen bzw. hinteren Ende des Anhängers 12 angeordnet und jeweils von der entsprechenden Endseite her zugänglich. Die Sanitätsmodule 24, 28 befinden sich demgegenüber parallel zu den Längsseiten des Anhängers 12 und sie sind im Transportzustand (Figur 3) bündig zwischen den Sanitärmodulen 22, 26 angeordnet.

Im Betriebszustand sind die Sanitärmodule 24, 28 demgegenüber zur Nutzerseite nach vorne herausgezogen, wie dies in Figur 1 für das Sanitärmodul 24 dargestellt ist. Hierdurch wird eine bessere Zugänglichkeit über den Radkasten 40 des Anhängers 12 erreicht. In der Draufsicht in Figur 3 ist der Radkasten 40 nur für eines der beiden Räder des Anhängers 12 gezeigt, wohingegen das andere Rad (mit Bezugsziffer 42 bezeichnet), zur Verdeutlichung ohne Radkasten dargestellt ist.

Jedes Sanitärmodul 22, 24, 26, 28 enthält also mehrere Sanitärelemente (zwei beim Sanitärmodul 28, drei bei den anderen Sanitärmodulen). Die Sanitärelemente sind jeweils über eine Rückwand 44 zu dem kompakten, einstückigen Sanitärmodul verbunden. Die Rückwände 44 sind so ausgebildet, dass sie sowohl im Transportzustand (Figur 3) als auch im Betriebszustand (Figur 1) den Zentralbereich 14 mit den technischen Versorgungseinrichten umlaufend umschließen. Die technischen Versorgungseinrichtungen sind damit einem direkten Zugriff des Nutzers entzogen.

In dem bevorzugten Ausführungsbeispiel sind die Sanitärmodule 22 bis 28 jeweils aus einem glasfaserverstärkten Kunststoff mit einer pflegeleichten Gelcode-Schicht hergestellt. Der Bodenbereich der Sanitärmodule 22 und 26 ist mit einer Platte aus Edelstahl beplankt. Hierdurch wird eine robuste und trotzdem leichtbauende Konstruktion erreicht.

Die Sanitäranlage 10 besitzt in dem gezeigten Ausführungsbeispiel ferner vier (erste) Seitenklappen 48, die mit Hilfe von Scharnieren (hier nicht gesondert dargestellt) an den vier Außenseiten des Anhängers 12 angeordnet sind. In den Darstellungen der Figuren 1 bis 3 sind die vier Seitenklappen 48 jeweils nach unten in eine horizontalen Lage verschwenkt. In dieser Schwenkposition bilden die vier Seitenklappen 48 einen umlaufenden Trittbereich um die Sanitärmodule 22 bis 28. An den vier verbleibenden Ecken sind abnehmbare Steckbretter 50 eingesteckt, an deren frei zugänglicher Außenkante eine Trittleiter (hier nicht dargestellt) befestigt werden kann. Insgesamt besteht somit die Möglichkeit, die Sanitäranlage 10 von den vier Ecken her zu betreten. Für den Transport werden die Steckbretter 50 entfernt und anschließend werden die Seitenklappen 48 vertikal nach oben verschwenkt, so dass sie die Sanitärmodule 22 bis 28 beim Transport schützen, indem sie eine seitliche Außenwand bilden.

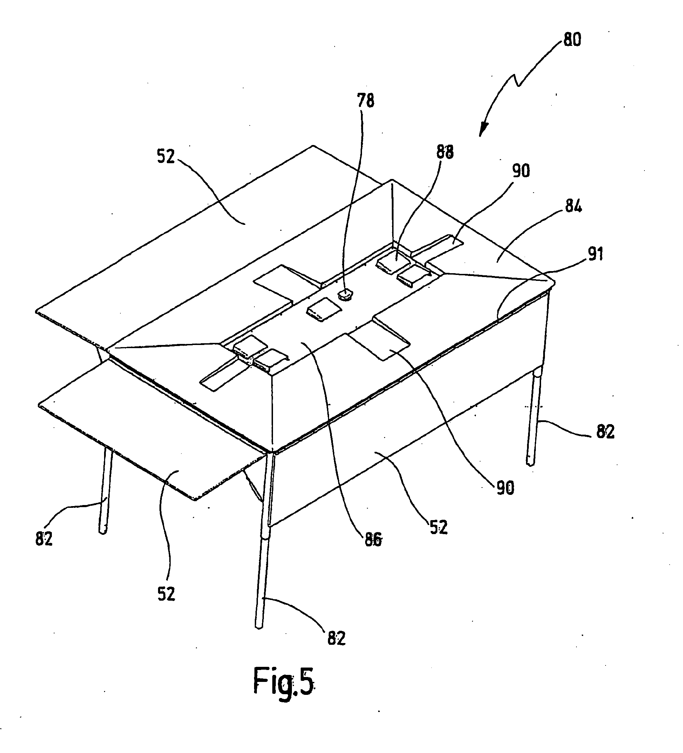

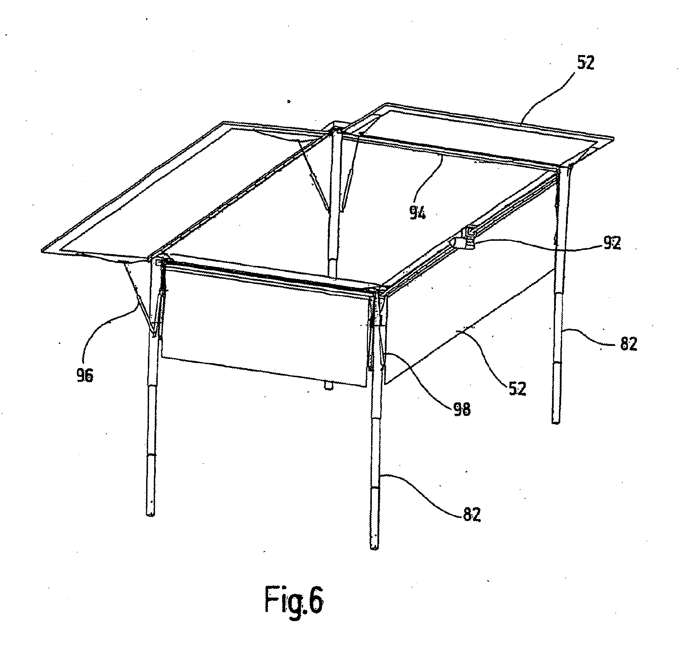

Figur 1 zeigt des Weiteren den Grundaufbau einer höhenverstellbaren Dachkonstruktion, die nachfolgend anhand der Figuren 5 und 6 noch näher beschrieben wird. An der Dachkonstruktion sind vier weitere Seitenklappen 52 verschwenkbar angeordnet. In der in Figur 1 dargestellten, horizontalen Schwenkposition bilden die Seitenklappen 52 ein Dach über den entsprechend darunter liegenden Seitenklappen 48: Bei Bedarf kann zwischen den ausgestellten Seitenklappen 52 und 48 auch eine Zeltplane befestigt werden, so dass die Sanitäranlage 10 den Nutzern dann einen vollständigen Wetterschutz bietet. Des Weiteren ist in einem bevorzugten Ausführungsbeispiel ein umlaufendes Geländer (hier nicht dargestellt) vorhanden, das am äußeren Rand der ausgestellten Seitenklappen 48 befestigt wird.

Zum Transport der Sanitäranlage 10 wird zunächst, sofern vorhanden, die seitliche Zeltplane abgenommen, die Sanitärmodule 24 und 28 werden in ihre in Figur 3 dargestellte Transportposition verschoben und sodann werden die Seitenklappen 48, 52 eingeklappt. Dabei ist von den geometrischen Abmessungen her vorgesehen, dass die oberen Seitenklappen im eingeschwenkten Zustand die unteren Seitenklappen 48 an deren Oberkante übergreifen. Die unteren Seitenklappen 48 werden dadurch gegen ein ungewolltes Aufklappen gesichert.

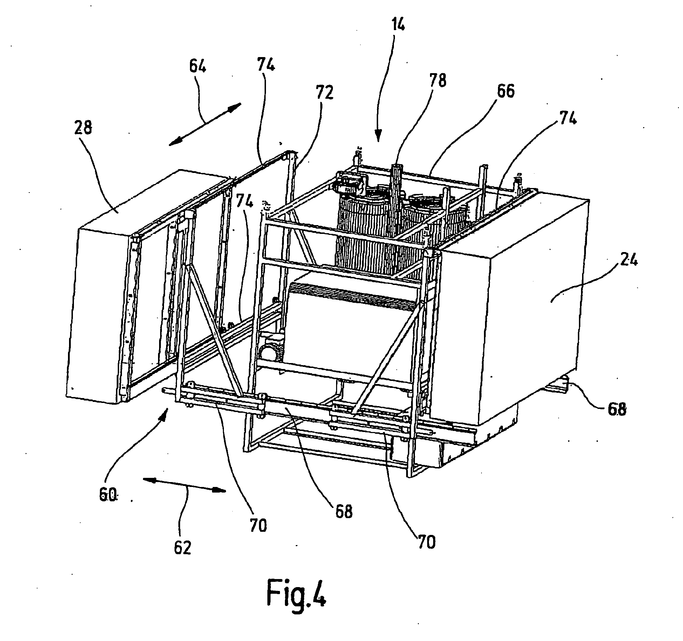

In Figur 4 ist der zentrale Technikbereich 14 sowie ein Verschiebegestell 60 dargestellt, an dem die beiden Sanitärmodule 24, 28 verschieblich angeordnet sind. Der Einfachheit halber sind die Sanitärmodule 24, 28 dabei nur schematisch als Blöcke dargestellt. Das Verschiebegestell 60 ermöglicht eine Verschiebung jedes Sanitärmoduls 24, 28 in zwei zueinander orthogonalen, horizontalen Richtungen, die in Figur 4 mit den Pfeilen 62, 64 angedeutet sind. Dazu besitzt das Verschiebegestell 60 einen Rahmen 66, der den zentralen Technikbereich 14 umgibt und auf dem Anhänger 12 feststehend angeordnet ist. An seinem unteren Ende besitzt der Rahmen 66 zwei parallele, horizontale Schienen 68, die sich quer zwischen den beiden Sanitärmodulen 24, 28 erstrecken. An den Schienen 68 sind insgesamt vier Schlitten 70 gelagert. Die Schlitten 70 ermöglichen eine Verschiebung der Sanitärmodule 24, 28 in Richtung des Pfeils 62, das heißt senkrecht zur Benutzerseite der Sanitärmodule 24, 28.

Jeweils zwei Schlitten 70 sind mit einem schienenübergreifenden Rahmenteil 72 verbunden. Die Rahmenteile 72 lassen sich als Ganzes in Richtung des Pfeils 62 verschieben. An den Rahmenteilen 72 sind zwei horizontale Schienen 74 angeordnet, die den Zwischenraum zwischen den jeweils zusammengehörenden Schlitten 70 überbrücken. An den Schienen 74 ist querverschieblich das Sanitärmodul 24 bzw. 28 gelagert. Insgesamt ermöglicht das Verschiebegestell 60 damit die Verschiebung der Sanitärmodule 24, 28 in den beiden orthogonalen Horizontalrichtungen. Insbesondere ist es damit möglich, jedes Sanitärmodul 24, 28 von der Transportposition (Figur 3) in die Nutzungsposition (Figur 1) nach vorne zu ziehen. Zu Wartungszwecken kann jedes der beiden Sanitärmodule 24, 28 dann noch weiter nach vorne gezogen und anschließend zur Seite verschoben werden, wie dies in Figur 2 dargestellt ist.

Figur 4 zeigt des Weiteren noch einen Abluftkamin 78, der im zentralen Technikbereich 14 angeordnet ist. Der Kamin 78 mündet in dem bevorzugten Ausführungsbeispiel in der nachfolgend beschriebenen Weise auf dem Dach der Sanitäranlage 10.

Eine bevorzugte Dachkonstruktion ist in den Figuren 5 und 6 schematisch dargestellt. Das Dach 80 besitzt eine rechteckige Grundfläche, die der Grundfläche des Anhängers 12 entspricht. Es ist an seinen vier Ecken auf Ständern 82 abgestützt, die nach Art einer Teleskopstange vertikal längenveränderlich sind. Jeder Ständer 82 ist im Inneren hohl und dort ist jeweils eine Gewindestange angeordnet (nicht dargestellt), deren Betätigung die Dachfläche 84 nach oben oder unten bewegt. Die Dachfläche 84 besitzt in ihrem zentralen Bereich eine rechteckige Vertiefung 86, deren Grundfläche unterhalb eines oberen Dachniveaus der Dachfläche 84 liegt. Im Bereich der Vertiefung 86 endet der Kamin 78. Außerdem sind im Bereich der Vertiefung 86 mehrere Belüftungshutzen 88 angeordnet. Weder der Kamin 78 noch die Belüftungshutzen 88 ragen über das obere Dachniveau nach oben hinaus. Von der Vertiefung 86 nach außen zu den vier Außenkanten der Dachfläche 84 verläuft jeweils eine Vertiefung als Kanal 90.

Die Dachfläche 84 ist aus einem GFK-Material in Sandwichbauweise hergestellt. Durch die Vertiefung 86 und die Seitenkanäle 90 wird unabhängig von deren zuvor erläuterter Funktion eine Profilierung erreicht, die für eine ausreichende Stabilität sorgt.

Die vier oberen Seitenklappen 52 sind mit der oberen Dachfläche 84 jeweils über durchgehende Gummischarniere 91 verbunden. Die Gummischarniere 91 sorgen für eine wasserdichte Abdichtung zwischen Dachfläche 84 und Seitenklappe 52.

Figur 6 zeigt das Dach 80 ohne Dachfläche 84 zur weiteren Erläuterung der Verstellmechanik. Ein Antrieb zur Höhenverstellung des Daches 80 ist in Figur 6 mit der Bezugsziffer 92 bezeichnet. Der Antrieb 92 ist im Bereich des Daches 80 angeordnet. Parallel zu den vier Außenkanten der Dachfläche 84 befinden sich vier Antriebswellen 94, von denen in Figur 6 nur eine aus Gründen der Übersichtlichkeit dargestellt ist. Die Antriebswellen 94 werden vom Antrieb 92 über Umlenkgetriebe angetrieben. Sie sind ihrerseits über Umlenkgetriebe mit den Gewindestangen (nicht dargestellt) in den teleskopartigen Ständern 82 verbunden. Durch Betätigung des Antriebs 92 kann das Dach 80 somit in der Höhe verstellt werden.

Die Seitenklappen 52 sind an den Ständern 82 jeweils über Gasdruckfedern 96 abgestützt. Im aufgeklappten Zustand fixieren die Gasdruckfedern 96 die Seitenklappen 52 in ihrer horizontalen Schwenkposition. Dabei sind die Gasdruckfedern 96 an ihrem oberen und unteren Fußpunkt jeweils drehbar gelagert und geometrisch insgesamt so angeordnet, dass sie bei vertikal nach unten verschwenkter Seitenklappe 52 über die vertikale Position hinaus nach innen verschwenken, wie dies andeutungsweise bei der Gasdruckfeder 98 gezeigt ist. Hierdurch steht die Gasdruckfeder 98 auch bei geschlossener Seitenklappe 52 unter Druck und sie fixiert die Seitenklappe 52 in ihrer vertikalen (geschlossenen) Schwenkposition.

In dem bevorzugten Ausführungsbeispiel besitzt die Sanitäranlage 10 verschiedene Sanitärelemente. Aufgrund der jeweils gleichen Abmessungen kann an Stelle des Sanitärmoduls 22 mit den Toiletten jedoch auch ein Sanitärmodul 26 mit Duschen installiert sein oder umgekehrt. In gleicher Weise sind die gezeigten Sanitärmodule 24 und 28 jeweils austauschbar. Darüber hinaus ist grundsätzlich auch eine andere Bestückung der Sanitärmodule 22 bis 28 je nach Bedarf möglich.

Wie in Figur 1 dargestellt, fährt das Dach in der Betriebsposition deutlich über die Höhe der Sanitärmodule 22 bis 28 hinaus. Der verbleibende Zwischenraum zwischen dem oberen Ende der Sanitärmodule und der Unterkante des Daches wird in bevorzugten Ausführungsbeispielen mit Vorhängen oder längenveränderlichen Lamellenkonstruktionen (nicht dargestellt) optisch verschlossen. Damit ist der zentrale Technikbereich den Blicken und dem Zugriff der Nutzer vollständig entzogen.

## Patentansprüche

1. Mobile Sanitäranlage zur ortsunabhängigen sanitären Versorgung einer Vielzahl von Personen, mit einer transportablen Plattform (12), insbesondere einem Fahrgestell, auf der eine Vielzahl von Sanitärelementen (30, 32, 36, 38) und eine Anzahl von technischen Versorgungseinrichtungen (16, 18, 20) für die Sanitärelemente (30, 32, 36, 38) angeordnet sind, **dadurch gekennzeichnet, dass** die technischen Versorgungseinrichtungen (16, 18, 20) in einem zentralen Bereich (14) der Plattform (12) angeordnet sind, der von der Vielzahl der Sanitärelemente (30, 32, 36, 38) ringsum umgeben ist.

2. Mobile Sanitäranlage nach Anspruch 1, **dadurch gekennzeichnet, dass** jedes Sanitärelement (30, 32, 36, 38) eine Rückwand (44) aufweist, wobei die Vielzahl der Rückwände (44) die technischen Versorgungseinrichtungen (16, 18, 20) umlaufend umschließen.

3. Mobile Sanitäranlage nach Anspruch 2, **dadurch gekennzeichnet, dass** die technischen Versorgungseinrichtungen einen Schaltschrank (18) mit einem Bedienpult (20) beinhalten, das über die Rückwand (44) nach oben hinausragt.

4. Mobile Sanitäranlage nach einem der Ansprüche 1 bis 3, **dadurch gekennzeichnet, dass** zumindest eines der Sanitärelemente (24, 28) derart beweglich angeordnet ist, dass es in einer ersten Position an den zentralen Bereich (14) angrenzt und in einer zweiten Position vom zentralen Bereich (14) entfernt ist, um einen Zugang zum zentralen Bereich (14) freizugeben.

5. Mobile Sanitäranlage nach Anspruch 4, **dadurch gekennzeichnet, dass** das zumindest eine Sanitärelement (24, 28) an einem Gestell (60) befestigt ist, das eine Verschiebebewegung des zumindest einen Sanitärelements (24, 28) ermöglicht, und zwar vorzugsweise in zumindest einer horizontalen Achsrichtung (62, 64).

6. Mobile Sanitäranlage nach Anspruch 5, **dadurch gekennzeichnet, dass** das Verschiebegestell (60) so ausgebildet ist, dass es eine Verschiebebewegung in zumindest zwei zueinander orthogonalen, vorzugsweise horizontalen, Achsrichtungen (62, 64) ermöglicht.

7. Mobile Sanitäranlage nach einem der Ansprüche 1 bis 6, **dadurch gekennzeichnet, dass** die Sanitärelemente (30, 32, 36, 38) zu einer Vielzahl von Sanitärmodulen (22, 24, 26, 28) verbunden sind, wobei jeweils ein Sanitärmodul an einer Seite des zentralen Bereichs (14) angeordnet ist.

8. Mobile Sanitäranlage nach einem der Ansprüche 1 bis 7, **gekennzeichnet durch** ein in der Höhe, verstellbares Dach (80), wobei ein Verstellantrieb (92) für das Dach (80) vorzugsweise am Dach (80) selbst angeordnet ist.

9. Mobile Sanitäranlage nach Anspruch 8, **dadurch gekennzeichnet, dass** das Dach (80) auf seiner Oberseite eine zentrale Vertiefung (86) aufweist, deren Grundfläche unterhalb eines oberen Dachniveaus liegt, wobei vorzugsweise zumindest ein mit den technischen Versorgungseinrichtungen (16, 18, 20) verbundener Kamin (78) unterhalb des oberen Dachniveaus in der Vertiefung (86) endet.

10. Mobile Sanitäranlage nach Anspruch 9, **dadurch gekennzeichnet, dass** die Vertiefung (86) in zumindest einen seitlich zum Dachrand abzweigenden Kanal (90) ausläuft.

11. Mobile Sanitäranlage nach einem der Ansprüche 1 bis 10, **gekennzeichnet durch** eine Vielzahl von ersten schwenkbaren Seitenklappen (48), die die Sanitärelemente (30, 32, 36, 38) in einer ersten Schwenkposition zumindest teilweise wandartig von außen bedecken und die in einer zweiten Schwenkposition einen umlaufenden Trittbereich um die Sanitärelemente (30, 32, 36, 38) bilden.

12. Mobile Sanitäranlage nach einem der Ansprüche 1 bis 11, **gekennzeichnet durch** eine Vielzahl von zweiten schwenkbaren Seitenklappen (52), die die Sanitärelemente (30, 32, 36, 38) in einer ersten Schwenkposition zumindest teilweise wandartig von außen bedecken und die in einer zweiten Schwenkposition einen umlaufenden Dachbereich über den Sanitärelementen (30, 32, 36, 38) bilden.

13. Mobile Sanitäranlage nach Anspruch 11 und 12, **dadurch gekennzeichnet, dass** die zweiten schwenkbaren Seitenklappen (52) die ersten schwenkbaren Seitenklappen (48) von oben übergreifen, wenn sich die ersten und zweiten Seitenklappen (48, 52) jeweils in ihrer ersten Schwenkposition befinden.

14. Mobile Sanitäranlage nach Anspruch 12 oder 13, **dadurch gekennzeichnet, dass** die zweiten Seitenklappen (52) jeweils mit zumindest einem Federelement (96, 98) verbunden sind, welches die zweiten Seitenklappen (52) aufgrund seiner Geometrie sowohl in ihrer ersten als auch in ihrer zweiten Schwenkposition fixiert.

15. Mobile Sanitäranlage nach einem der Ansprüche 1 bis 14, **dadurch gekennzeichnet, dass** die Sanitärelemente zumindest eine Dusche (38), zumindest eine Toilette (36), und/oder zumindest ein Waschbecken (32) beinhalten.

16. Mobile Sanitäranlage nach Anspruch 15, **dadurch gekennzeichnet, dass** im Bereich des Waschbeckens (32) ein verschwenkbarer Spiegel (34), insbesondere ein handelsüblicher Lkw-Seitenspiegel, angeordnet ist.

## Claims

1. A mobile sanitary system for location-independent sanitary care of a plurality of people, comprising a transportable platform (12), in particular a chassis, on which a plurality of sanitary elements (30, 32, 36, 38) and a number of technical supply devices (16, 18, 20) for the sanitary elements (30, 32, 36, 38) are arranged, **characterized in that** the technical supply devices (16, 18, 20) are arranged in a central region (14) of the platform (12), which region is surrounded all the way around by the plurality of sanitary elements (30, 32, 36, 38).

2. The mobile sanitary system as claimed in claim 1, **characterized in that** each sanitary element (30, 32, 36, 38) has a rear wall (44), with the plurality of rear walls (44) enclosing the technical supply devices (16, 18, 20) in an encircling manner.

3. The mobile sanitary system as claimed in claim 2, **characterized in that** the technical supply devices comprise a switch cabinet (18) with a control console (20) which protrudes upward above the rear wall (44).

4. The mobile sanitary system as claimed in anyone of claims 1 to 3, **characterized in that** at least one of the sanitary elements (24, 28) is arranged movably in such a manner that, in a first position, it is adjacent to the central region (14) and, in a second position, it is remote from the central region (14) in order to open up access to the central region (14).

5. The mobile sanitary system as claimed in claim 4, **characterized in that** the at least one sanitary element (24, 28) is secured to a frame (60) which permits displacement of the at least one sanitary element (24, 28), preferably in at least one horizontal direction (62, 64).

6. The mobile sanitary system as claimed in claim 5, **characterized in that** the displacement frame (60) is designed such that it permits displacement in at least two, preferably horizontal, directions (62, 64) which are orthogonal to each other.

7. The mobile sanitary system as claimed in anyone of claims 1 to 6, **characterized in that** the sanitary elements (30, 32, 36, 38) are connected to form a plurality of sanitary modules (22, 24, 26, 28), with one sanitary module in each case being arranged on one side of the central region (14).

8. The mobile sanitary system as claimed in anyone of claims 1 to 7, **characterized by** a height-adjustable roof (80), with an adjustment drive (92) for the roof (80) preferably being arranged on the roof (80) itself.

9. The mobile sanitary system as claimed in claim 8, **characterized in that**, on its upper side, the roof (80) has a central depression (86), the area of which lies below an upper roof level, with preferably at least one chimney (78) which is connected to the technical supply devices (16, 18, 20) ending in the depression (86) below the upper roof level.

10. The mobile sanitary system as claimed in claim 9, **characterized in that** the depression (86) runs into at least one channel (90) branching off laterally from the roof edge.

11. The mobile sanitary system as claimed in anyone of claims 1 to 10, **characterized by** a plurality of first pivotable side flaps (48) which, in a first pivoting position, at least partially cover the sanitary elements (30, 32, 36, 38) from the outside in the manner of a wall and which, in a second pivoting position, form an encircling step region around the sanitary elements (30, 32, 36, 38).

12. The mobile sanitary system as claimed in anyone of claims 1 to 11, **characterized by** a plurality of second pivotable side flaps (52) which, in a first pivoting position, at least partially cover the sanitary elements (30, 32, 36, 38) from the outside in the manner of a wall and which, in a second pivoting position, form an encircling roof region over the sanitary elements (30, 32, 36, 38).

13. The mobile sanitary system as claimed in claim 11 and 12, **characterized in that** the second pivotable side flaps (52) engage over the first pivotable side flaps (48) from above when the first and second side flaps (48, 52) each are in their first pivoting position.

14. The mobile sanitary system as claimed in claim 12 or 13, **characterized in that** the second side flaps (52) each are connected to at least one spring element (96, 98) which, on account of its geometry, fixes the second side flaps (52) both in their first pivoting position and in their second pivoting position.

15. The mobile sanitary system as claimed in anyone of claims 1 to 14, **characterized in that** the sanitary elements comprise at least one shower (38), at least one toilet (36), and/or at least one washbasin (32).

16. The mobile sanitary system as claimed in claim 15, **characterized in that** a pivotable mirror (34), in particular a commercially available truck side mirror, is arranged in the region of the washbasin (32).

## Revendications

1. Installation sanitaire mobile pour pourvoir aux besoins sanitaires d'un grand nombre de personnes indépendamment du site, comportant une plate-forme (12) mobile, en particulier un châssis de roulement, sur laquelle sont montés une pluralité d'éléments sanitaires (30, 32, 36, 38) et un nombre de dispositifs techniques de distribution (16, 18, 20) pour les éléments sanitaires (30, 32, 36, 38), **caractérisée en ce que** les dispositifs techniques de distribution (16, 18, 20) sont disposés dans une zone centrale (14) de la plate-forme (12), laquelle est entourée sur tout son pourtour par la pluralité d'éléments sanitaires (30, 32, 36, 38).

2. Installation sanitaire mobile selon la revendication 1, **caractérisée en ce que** chaque élément sanitaire (30, 32, 36, 38) comporte une paroi arrière (44), la pluralité de parois arrières (44) entourant les dispositifs techniques de distribution (16, 18, 20) sur tout leur pourtour.

3. Installation sanitaire mobile selon la revendication 2, **caractérisée en ce que** les dispositifs techniques de distribution comportent une armoire de commande (18) avec un tableau de commande (20), qui s'avance vers le haut au-delà de la paroi arrière (44).

4. Installation sanitaire mobile selon l'une quelconque des revendications 1 à 3, **caractérisée en ce qu'**au moins un des éléments sanitaires (24, 28) est monté de manière mobile, de telle sorte que, dans une première position, il est adjacent à la zone centrale (14) et, dans une deuxième position, il est éloigné de la zone centrale (14), afin de dégager un accès vers la zone centrale (14).

5. Installation sanitaire mobile selon la revendication 4, **caractérisée en ce que** ledit au moins un élément sanitaire (24, 28) est fixé sur un bâti (60), qui permet un mouvement de translation dudit au moins un élément sanitaire (24, 28), à savoir de préférence dans au moins une direction axiale (62, 64) horizontale.

6. Installation sanitaire mobile selon la revendication 5, **caractérisée en ce que** le bâti de déplacement (60) est réalisé de telle sorte qu'il permet un mouvement de translation dans au moins deux directions axiales (62, 64) orthogonales entre elles, de préférence horizontales.

7. Installation sanitaire mobile selon l'une quelconque des revendications 1 à 6, **caractérisée en ce que** les éléments sanitaires (30, 32, 36, 38) sont reliés pour former une pluralité de modules sanitaires (22, 24, 26, 28), chaque module sanitaire étant agencé sur un côté de la zone centrale (14).

8. Installation sanitaire mobile selon l'une quelconque des revendications 1 à 7, **caractérisée par** un toit (80) réglable en hauteur, un mécanisme de réglage (92) pour le toit (80) étant monté, de préférence, sur le toit (80) lui-même.

9. Installation sanitaire mobile selon la revendication 8, **caractérisée en ce que** le toit (80), sur sa face supérieure, comporte un creux (86) central, dont le fond se situe en dessous d'un niveau supérieur du toit, au moins une cheminée (78), reliée aux dispositifs techniques de distribution (16, 18, 20), se terminant en dessous du niveau supérieur du toit dans le creux (86).

10. Installation sanitaire mobile selon la revendication 9, **caractérisée en ce que** le creux (86) se prolonge par au moins un conduit (90) dirigé latéralement vers le bord du toit.

11. Installation sanitaire mobile selon l'une quelconque des revendications 1 à 10, **caractérisée par** une pluralité de premières trappes latérales (48) pivotantes, qui, dans une première position de pivotement, dissimulent de l'extérieur, au moins partiellement en forme de paroi, les éléments sanitaires (30, 32, 36, 38) et qui, dans une deuxième position de pivotement, forment une zone de marche périphérique autour des éléments sanitaires (30, 32, 36, 38).

12. Installation sanitaire mobile selon l'une quelconque des revendications 1 à 11, **caractérisée par** une pluralité de deuxièmes trappes latérales (52) pivotantes, qui, dans une première position de pivotement, dissimulent de l'extérieur, au moins partiellement en forme de paroi, les éléments sanitaires (30, 32, 36, 38) et qui, dans une deuxième position de pivotement, forment une zone de toit périphérique autour des éléments sanitaires (30, 32, 36, 38).

13. Installation sanitaire mobile selon les revendications 11 et 12, **caractérisée en ce que** les deuxièmes trappes latérales (52) pivotantes s'engagent par le haut sur les premières trappes latérales (48) pivotantes, lorsque les premières et les deuxièmes trappes latérales (48, 52) se situent respectivement dans leur première position de pivotement.

14. Installation sanitaire mobile selon la revendication 12 ou 13, **caractérisée en ce que** les deuxièmes trappes latérales (52) sont reliées chacune à au moins un élément de ressort (96, 98), qui, compte tenu de sa géométrie, immobilise les deuxièmes trappes latérales (52) tant dans leur première que dans leur deuxième position de pivotement.

15. Installation sanitaire mobile selon l'une quelconque des revendications 1 à 14, **caractérisée en ce que** les éléments sanitaires comportent au moins une douche (38), au moins un WC (36) et / ou au moins un lavabo (32).

16. Installation sanitaire mobile selon la revendication 15, **caractérisée en ce que**, dans la zone du lavabo (32), est monté un miroir (34) pivotant, en particulier un rétroviseur classique de camion.
